# EUROPÄISCHE PATENTANMELDUNG

(11) **EP 0 862 228 A1**
(43) Veröffentlichungstag der Anmeldung: **02.09.1998**
(21) Anmeldenummer: 97119170.5
(22) Anmeldetag: 03.11.1997
(51) Int. Cl.: H01M 2/10, H01M 2/20, H01M 6/44

(54) **Batterieblock für einen Satelliten**

(30) Priorität: 21.02.1997 DE 19706805
(71) Anmelder: DORNIER GmbH, 88039 Friedrichshafen (DE)
(72) Erfinder: Doll, Bernhard, Dipl.-Ing., 88090 Immenstaad (DE); Wolters, Reinhard, Dipl.-Ing., 88682 Salem (DE); Lampen, Martin, Dipl.-Phys., 88090 Immenstaad (DE)
(74) Vertreter: Meel, Thomas

(57) **Zusammenfassung**

Die Erfindung betrifft einen Batterieblock (**B**) für Satelliten. Er umfaßt mehrere Einzelzellen (**E**), die an ihren Stirnflächen mit der jeweils benachbarten Einzelzellen (**E**) verschweißt sind, wobei die Anordnung der Einzelzellen durch eine Ummantelung (**U**) sowie Stopfen (**S**) an den Enden hermetisch abgedichtet ist. Die Ummantelung (**U**) besteht aus faserverstärktem Kunststoff und liegt ohne Zwischenraum auf den Mantelflächen der Einzelzellen (**E**) an.

## Beschreibung

Die Erfindung betrifft einen Batterieblock für einen Satelliten, insbesondere für einen Kleinsatelliten.

### 1. Einsatzbereich

Alle Satelliten, unabhängig von Größe und Einsatzbereich benötigen Batterien, um die Versorgung mit elektrischer Energie in Zeiten ohne direkte Sonnenbestrahlung (Aktivierung nach dem Start und Erdschattenphasen) aufrecht zu erhalten. Neben einer Reihe anderer Zellmaterialien hat sich sich die Kombination Nickel-Kadmium (NiCd) in der terrestrischen Anwendung und in der Raumfahrt bewährt. Im Bereich von Kleinsatelliten, das heißt für Satelliten mit moderatem Leistungsbedarf und Lebenszeiten von bis zu 5 Jahren, haben sich in allen Funktionsbereichen kostengünstige Komponenten etabliert und es ergibt sich ebenfalls für Batterien ein Zwang zur kostengünstigen Fertigung ohne die essentiellen Anforderungen der Raumflugtauglichkeit aufzugeben.

### 2. Typische Anforderungen

Für die Anwendung bei Kleinsatelliten ergeben sich die folgenden typischen technischen Anforderungen:
- Kapazität: 4 bis 12 Ah
- Spannung: 9 V bis 28 V
- Zyklenzahl: ca. 30.000 (für Missionen auf erdnahen Bahnen und 5 Jahren Dauer)
- Temperaturbereich im Satelliten: -10°C bis +30°C
- Gasdichtigkeit im Vakuum.

### 3. Stand der Technik

Herkömmliche, kommerziell erhältliche NiCd-Batterien eignen sich wegen ihrer üblicherweise vorhandenen Überdruckventile und der damit verbundenen Problematik des Ausgasens, was insbesondere zu einem Elektrolytverlust führt, nicht für den Einsatz im Vakuum. Deshalb werden für den Einsatz in der Raumfahrt spezielle NiCd-Zellen verwendet, die in geringen Mengen und mit großen Produktionsaufwand gefertigt werden. Dabei müssen die Zellen so gewählt werden, daß nur solche gleicher elektrischer Charakteristik zu einer Batterie zusammengefaßt werden.
Die für Raumfahrtanwendungen konzipierten Einzelzellen werden meist gemeinsam in einer Füllmasse vergossen und in einem Aluminium-Gehäuse akkommodiert. Durch die Vergußmasse und die bauliche Anordnung ergibt sich eine schlechte Wärmekopplung an die Gehäuseaußenseite bzw. -boden, dem durch spezielle Maßnahmen (wie z.B. Wärmeleitfinnen) entgegengewirkt werden muß. Dadurch ergeben sich sowohl hohe Batteriemasse wie auch Fertigungsaufwand. Zudem haben die Zellen einen sehr eingeschränkten Betriebstemperaturbereich, der eine besondere Konditionierung mittels spezieller Thermalradiatoren erfordert.

Für die terrestrische Anwendung ist aus der **DE 38 24 222 C2** ein Batterieblock mit mehreren Einzelzellen bekannt. Die Einzelzellen sind mittels einer Ummantelung sowie zusätzlicher Stopfen an den Enden nach außen hermetisch abgedichtet.

### 4. Aufgabe

Aufgabe der Erfindung ist es, einen Batterieblock für die Anwendung in Satelliten zu schaffen, mit dem eine gegenüber den bekannten Ausführungen möglichst hohe Zyklenfestigkeit und hohe Lebensdauer (mindestens 30.000 Beund Entladezyklen bei einer Lebensdauer von mindestens 5 Jahren) bei hoher Zuverlässigkeit und geringen Herstellungskosten erreicht wird.

### 5. Lösung der Aufgabe

Diese Aufgabe wird mit dem Batterieblock des Anspruch 1 gelöst. Vorteilhafte Ausbildungen der Erfindung sind Gegenstand weiterer Ansprüche.

Der erfindungsgemäße Batterieblock ist folgendermaßen aufgebaut:
Er umfaßt mehrere, auch kommerziell erhältliche Einzelzellen, die an ihren Stirnflächen mit der jeweils benachbarten Zellen verschweißt sind. Diese Anordnung von miteinander verschweißten Zellen ist durch eine Ummantelung sowie Stopfen an den Enden nach außen hermetisch abgedichtet. Die Ummantelung besteht dabei aus faserverstärktem Kunststoff und liegt ohne Zwischenraum auf den Mantelflächen der Einzelzellen an.

Mehrere baugleiche Blöcke können elektrisch in Reihen bzw. parallel verbunden werden, um die jeweils notwendige Spannung bzw. Kapazität zu erzeugen.

### 6. Vorteile der Erfindung

- Durch die erfindungsgemäße Ausführung ist es möglich, für die Einzelzellen kommerziell erhältliche Zellen zu verwenden, z.B. NiCd-Zellen Sanyo N-4000DR mit jeweils 4 Ah-Nenn-Kapazität und einer Nominalspannung von 7 x 1,2 V = 8,4 V. Durch die Verwendung von Zellen aus der kommerziellen Massenfertigung wird eine gleichbleibende Qualität innerhalb der Produktionsreihe gewährleistet. Es ist darauf hinzuweisen, daß neben NiCd-Zellen auch alle sonstigen Batterietypen verwendet werden können.
- Auch wenn die Einzelzellen, insbesondere wegen vorhandener Überdruckventile, nicht speziell für den Einsatz unter Vakuumbedingungen ausgerüstet sind, garantiert das erfindungsgemäße Blockdesign durch die Verwendung von seitlichen Stopfen und einer Gesamtummantelung mit faserverstärktem Kunststoff höchste Dichtigkeit. Ein Elektrolytverlust durch Ausgasen sowie eine mögliche Kontamination des Elektrolyten wird somit verhindert.
- Die mit der hermetischen Abdichtung verbundene Gefahr eines Überdrucks innerhalb der Zellen (insbesondere durch Überladen der Zellen), wird durch die Wahl des faserverstärkten Kunststoffs für die Ummantelung begegnet. Damit ist eine Druckfestigkeit von mehr als 20 bar möglich. Eine Explosion und damit der Ausfall des Blocks wird auf diese Weise sicher verhindert.
- Durch die Verwendung von faserverstärktem Kunststoff, z.B. GFK oder faserverstärkte Kunststoffe mit Kevlarfasern, als Tragestruktur ist das Leistungsgewicht sehr gering.
- Durch die Verschweißung wird eine sichere Verbindung der einzelnen Zellen erreicht. Die Verschweißung trägt außerdem zur verbesserten mechanischen Belastbarkeit des gesamten Blocks bei. Vorteilhaft werden solche Schweißverfahren eingesetzt, bei der eine möglichst kleinflächige Verschweißung möglich ist, um die Einzelzellen thermisch reproduzierbar und möglichst gering zu belasten. Besonders geeignete Schweißverfahren sind das Plasmaschweißen und das Punktschweißen.
- Die Auslegung des Batterieblocks in der Form einer Stange oder eines Rohrs erlaubt einen hohen Freiheitsgrad für die Akkommodierung im Satelliten.
- Die strukturelle Auslegung des Batterieblocks gewährleistet eine enorm hohe mechanische Belastbarkeit.
- Sie erlaubt damit eine Verwendung des Batterieblocks als Strukturelement innerhalb des Satelliten.
- Die thermische Auslegung des erfindungsgemäßen Batterieblocks ist durch eine gleichmäßige Abführung der Zellwärmeentwicklung über die Ummantelung aus glasfaserverstärktem Kunststoff gekennzeichnet.
- Die gleichmäßige Temperatur aller Zellen fördert eine lange Lebenszeit der Batterie.
- Durch die große Abstrahlfläche der faserverstärkten Ummantelung ist keine weitere Wärmeverteilung und kein spezieller Thermalradiator für die Batterie notwendig (thermische Anbindung über Strahlungsaustausch mit dem satelliteninternen Wärmehaushalt).
- Die Modularität auf Blockebene erlaubt den Einsatz ohne Modifikation der Mechanik für verschiedene, für Kleinsatelliten typischen Spannungen und Kapazitäten. Die Gesamtkapazitäten und Gesamtspannungen für mehrere Blöcke in Serienschaltung oder Parallelschaltung ist in Tabelle 1 angegeben.

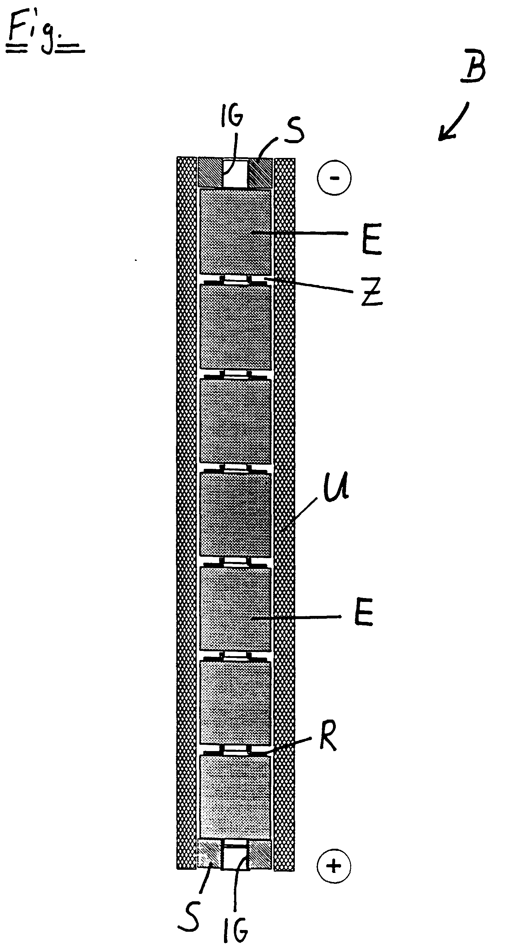

Eine Ausführung der Erfindung wird anhand der Figur näher erläutert. Sie zeigt einen erfindungsgemäßen Batterieblock B in schematischer Darstellung. Der gezeigt Batterieblock umfaßt in dieser Ausführung 7 kommerziell erhältliche zylinderförmige NiCd-Zellen E. Die Zellen sind an ihrer Stirnseite über einen kleinen Zwischenring R aus rostfreiem Edelstahl durch Plasmaschweißen miteinander verbunden. Durch diese Verbindungstechnik werden die Zellen E thermisch reproduzierbar und nur gering belastet.
Zur hermetischen Abdichtung und strukturellen Integrität ist der gesamte Block an seinen Mantelflächen U mit GFK umwickelt und an den Enden mit GFK-Stopfen S abgeschlossen. Die Wanddicke der Ummantelung U beträgt z.B. 1,5 mm. Anders als in dieser schematischen Darstellung liegt die Ummantelung U unmittelbar auf den Mantelflächen der Einzelzellen E ohne Zwischenraum auf. In einer besonders vorteilhaften Ausführung sind sie fest miteinander verklebt. Volumina, in die der Elektrolyt der Einzelzellen E ausgasen kann, sind somit nur noch die Zwischenräume Z zwischen den Stirnseiten benachbarter Einzelzellen E. Durch die Tatsache, daß die Ummantelung U unmittelbar auf den Mantelflächen der Einzelzellen E angeordnet ist, sind diese Zwischenräume Z untereinander nicht verbunden.
Der elektrische Kontakt wird über ein Innengewinde IG an beiden Stopfen S gewährleistet. Das Innengewinde IG ist so ausgelegt, daß es gleichzeitig zur mechanischen Befestigung dienen kann.
Die thermische Ausbildung eines jeden Batterieblocks B ist durch eine gleichmäßige Abführung der Zellwärmeentwicklung über die Mantelfläche gekennzeichnet. Damit eignet sich diese Art von Batterie hervorragend für eine Akkommodierung innerhalb des Satelliten, wobei sie über Wärmestrahlung gekühlt wird.

Obwohl die Einzelzellen, die jeweils ein Überdruckventil aufweisen, nicht speziell für den Einsatz unter Vakuumbedingungen ausgerüstet sind, garantiert das erfindungsgemäße Blockdesign durch die Verwendung einer Ummantelung und seitlicher Stopfen aus GFK höchste Dichtigkeit. Damit ist jeder einzelne Batterieblock für den Einsatz unter Vakuumbedingungen geeignet.

Die mechanischen Eigenschaften für einen Block sind in einer konkreten Ausführung wie folgt.
Länge: 464 mm
Durchmesser: 35 mm
Gewicht: 1,25 kg
Querschnitt: kreisförmig

Damit ergibt sich für eine Batterie aus drei Blöcken ein Gesamtgewicht von 3 x 1,25 kg = 3,75 kg ohne externe Verdrahtung.

**Tabelle 1**

| | | Blöcke | |
|---|---|---|---|
| Kapazität | Spannung | in Serie | parallel |
| 4 Ah | 9 V | 1 | 1 |
| 8 Ah | 9 V | 1 | 2 |
| 4 Ah | 28 V | 3 | 1 |
| 8 Ah | 28 V | 3 | 2 |
| 12 Ah | 28 V | 3 | 3 |

## Patentansprüche

1. Batterieblock (**B**) für einen Satelliten,
mit mehreren Einzelzellen (**E**), die an ihren Stirnflächen mit der jeweils benachbarten Einzelzellen (**E**) verschweißt sind, wobei die Anordnung der Einzelzellen durch eine Ummantelung (**U**) sowie Stopfen (**S**) an den Enden hermetisch abgedichtet ist, **dadurch gekennzeichnet**, daß die Ummantelung (**U**) aus faserverstärktem Kunststoff besteht und ohne Zwischenraum auf den Mantelflächen der Einzelzellen (**E**) anliegt.

2. Batterieblock nach Anspruch 1, **dadurch gekennzeichnet,** daß die Stopfen (**S**) aus faserverstärktem Kunststoff bestehen.

3. Batterieblock nach einem der Ansprüche 1 oder 2, **dadurch gekennzeichnet**, daß benachbarte Einzelzellen (**E**) durch Plasmaschweißen oder Punktschweißen miteinander verbunden sind.

4. Batterieblock nach einem der Ansprüche 1 bis 3, **dadurch gekennzeichnet**, daß der faserverstärkte Kunststoff für die Ummantelung (**U**) und/oder die Stopfen (**S**) aus GFK besteht.

5. Batterieblock nach einem der vorangehenden Ansprüche, **dadurch gekennzeichnet**, daß der faserverstärkte Kunststoff für die Ummantelung (**U**) und/oder die Stopfen (**S**) eine Kevlarfaser als Verstärkungsfaser aufweist.

6. Batterieblock nach einem der vorangehenden Ansprüche, **dadurch gekennzeichnet**, daß die Stopfen (**S**) ein Innengewinde (**IG**) zur elektrischen Kontaktierung aufweisen.

7. Batterieblock nach einem der vorangehenden Ansprüche, **dadurch gekennzeichnet**, daß die Einzelzellen (**E**) NiCd-Zellen sind.

8. Batterieblock nach einem der vorangehenden Ansprüche, **dadurch gekennzeichnet**, daß die Einzelzellen (**E**) über einen Zwischenring (**R**) aus rostfreiem Stahl miteinander verschweißt sind.

9. Batterie für Satelliten, **dadurch gekennzeichnet**, daß sie mehrere elektrisch parallel oder in Reihe geschaltete Batterieblöcke (**B**) nach einem der vorangehenden Ansprüche umfaßt.
